(19) **Europäisches Patentamt / European Patent Office / Office européen des brevets**

(11) **EP 3 677 696 A1**

(12) **EUROPEAN PATENT APPLICATION**
published in accordance with Art. 153(4) EPC

(43) Date of publication:
08.07.2020 Bulletin 2020/28

(21) Application number: 19856884.2

(22) Date of filing: 05.06.2019

(51) Int Cl.:
*C22C 1/08* (2006.01)

(86) International application number:
PCT/JP2019/022336

(87) International publication number:
WO 2020/049815 (12.03.2020 Gazette 2020/11)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 07.09.2018 JP 2018168091

(71) Applicant: Sumitomo Electric Toyama Co., Ltd.
Imizu-shi
Toyama 934-8522 (JP)

(72) Inventors:
• TSUCHIDA, Hitoshi
Imizu-shi, Toyama 934-8522 (JP)
• NISHIMURA, Junichi
Imizu-shi, Toyama 934-8522 (JP)
• MABUCHI, Seiji
Imizu-shi, Toyama 934-8522 (JP)

(74) Representative: Boult Wade Tennant LLP
Salisbury Square House
8 Salisbury Square
London EC4Y 8AP (GB)

(54) **METAL POROUS BODY, FUEL CELL, AND PRODUCTION METHOD FOR METAL POROUS BODY**

(57) Provided is a metal porous body including a frame of a three-dimensional network structure, wherein the metal porous body has an outer appearance of a sheet shape, the frame is an alloy containing at least nickel and chromium, and is dissolved with iron in solid state, and the number of aluminum oxide powder adhered to the surface of the frame is 10 or less in 1 $cm^2$ of the apparent area of the metal porous body.

FIG.1

EP 3 677 696 A1

**Description**

TECHNICAL FIELD

The present disclosure relates to a metal porous body, a fuel cell, and a method of producing a metal porous body. The present application claims priority to Japanese Patent Application No. 2018-168091 filed on September 7, 2018, the disclosure of which is hereby incorporated by reference in its entirety.

BACKGROUND ART

A conventionally known method of producing a metal porous body having a high porosity and a large surface area involves forming a metal layer on a surface of a resin porous body such as a resin foam. For example, a metal porous body may be produced by performing an electro-conductive treatment on a resin molded article including a frame of a three-dimensional network structure to make a surface of the frame electrically conductive, then carrying out electroplating to form a metal layer on the frame, and then, if necessary, burning off the resin molded article.

Metal porous bodies have various applications, and some of the applications require a high corrosion resistance of the frame. As an example of a known metal porous body with a high corrosion resistance, a metal porous body including a nickel-chromium alloy frame may be given.

Japanese Patent Laying-Open No. 2012-149282 (PTL 1) teaches a method of producing a metal porous body including alloy of nickel and chromium, where the method involves preparing a metal porous body including a nickel frame (hereinafter also called "nickel porous body"), then performing plating to form a chromium layer on a surface of the frame, and subsequently performing a heat treatment to diffuse chromium.

Japanese Patent Laying-Open No. 08-013129 (PTL 2) teaches a method of producing a metal porous body including alloy of nickel and chromium by burying a nickel porous body in powder that includes Al, Cr, and $NH_4Cl$ or a compound of these and then performing a heat treatment in an atmosphere filled with Ar gas, $H_2$ gas, and/or the like to cause diffusion coating.

CITATION LIST

PATENT LITERATURE

PTL 1: Japanese Patent Laying-Open No. 2012-149282
PTL 2: Japanese Patent Laying-Open No. 08-013129

SUMMARY OF INVENTION

A metal porous body according to an aspect of the present disclosure is
a metal porous body including a frame of a three-dimensional network structure,
wherein the metal porous body has an outer appearance of a sheet shape,
the frame is an alloy containing at least nickel (Ni) and chromium (Cr), and is dissolved with iron (Fe) in solid state, and
the number of aluminum oxide ($Al_2O_3$) powder adhered to the surface of the frame is 10 or less in 1 $cm^2$ of the outer apparent area of the metal porous body.

A fuel cell according to an aspect of the present disclosure is a fuel cell that includes a gas diffusion layer, wherein the gas diffusion layer is the metal porous body mentioned above.

A method of producing a metal porous body according to an aspect of the present disclosure is a method of producing the metal porous body according to an aspect mentioned above in the present disclosure, the method includes:

preparing a porous body that includes a frame having a three-dimensional network structure and containing nickel as a main component;
alloying at least nickel with chromium by burying the porous body in powder that contains at least chromium (Cr), aluminum oxide ($Al_2O_3$) powder and ammonium chloride ($NH_4Cl$) and performing a heat treatment to cause diffusion coating of the frame with the chromium to form a metal porous body; and
removing the aluminum oxide powder adhered to the surface of the frame of the metal porous body so as to be 10 or less in 1 $cm^2$ of the outer apparent area of the metal porous body.

BRIEF DESCRIPTION OF DRAWINGS

Fig. 1 is a schematic view illustrating an example metal porous body according to an embodiment of the present disclosure;

Fig. 2 is a photograph illustrating a cross section of an example metal porous body according to an embodiment of the present disclosure;

Fig. 3 is an expanded view schematically illustrating a partial cross section of an example metal porous body according to an embodiment of the present disclosure;

Fig. 4 is a photograph of a foamed urethane resin which serves as an example resin molded article that includes a frame of a three-dimensional network structure;

Fig. 5 is a schematic view illustrating an example state in which measurement spots A to I are defined on the metal porous body in a method of measuring the number of aluminum oxide powder attached to the surface of a frame of the metal porous body;

Fig. 6 is a diagram illustrating an outline of a device for measuring pressure loss when a gas is supplied to the metal porous body;

Fig. 7 is a photograph illustrating a cross section of a metal porous body No. 1 in an example; and

Fig. 8 is a photograph illustrating a cross section of a metal porous body No. A in the comparative example.

DETAILED DESCRIPTION

[Problem to be Solved by the Present Disclosure]

In recent years, further enhancement in power and capacity (size reduction) has been demanded of various batteries such as fuel cells as well as power storage devices such as capacitors.

As a gas diffusion layer of a fuel cell, a carbon structure or a stainless steel (SUS) structure is typically used. The carbon structure or the SUS structure is formed with grooves that serve as gas channels. Each groove has a continuous linear shape with a width of about 500 $\mu$m. The grooves occupy about half the area of the boundary between the carbon structure or the SUS structure and an electrolyte, and therefore the gas diffusion layer has a porosity of about 50%. Since the gas diffusion layer has a not very high porosity and a great pressure loss, it is impossible for a conventional fuel cell to have a reduced size and an enhanced power at the same time.

To address this problem, the present inventors investigated the use of a metal porous body including a frame of a three-dimensional network structure to replace the carbon structure or the SUS structure as a gas diffusion layer of a fuel cell. By using a metal porous body having a high porosity as a gas diffusion layer, the fuel cell may have an enhanced gas diffusing performance and an increased gas utilization efficiency. For example, when a metal porous body is used as a gas diffusion layer in a polymer electrolyte fuel cell (PEFC), the metal porous body is exposed to a strong acid generated from a membrane electrode assembly (MEA), and therefore it needs to have a high corrosion resistance.

Since the metal porous body that includes a nickel-chromium alloy frame has a high corrosion resistance, it is used as a gas diffusion layer of a fuel cell.

In the production of a metal porous body by using the plating method as described in the method of PTL 1, it is necessary to use a trivalent chromium plating solution in consideration of the environment. When a trivalent chromium plating solution is used, however, the film forming rate is as low as about 0.3 $\mu$m/h and thereby it takes a long time to produce a metal porous body with a chromium alloy ratio of 20% or more. Therefore, there is room for improvement in terms of increasing productivity.

To address this problem, the present inventors investigated the surface state of the frame in detail in order to use the metal porous body produced by the diffusion coating method as described in the method of PTL 2 as the gas diffusion layer of a fuel cell. As a result, it was found that a very small amount of Cr powder, aluminum oxide powder, silicon carbide powder and the like was not diffused but remained on the surface of the frame. If the powder remains on the surface of the frame even at a very small amount, it may cause pressure loss of the gas after the fuel cell is operated.

In view of the above problems, an object of the present disclosure is to cheaply provide a metal porous body that is excellent in corrosion resistance and has fewer fine particles adhered to the surface of the frame.

[Advantageous Effect of the Present Disclosure]

According to the present disclosure, it is possible to cheaply provide a metal porous body that is excellent in corrosion resistance and has fewer fine particles adhered to the surface of the frame.

[Description of Embodiments]

First, a description will be given of each aspect of the present disclosure.

(1) A metal porous body according to an aspect of the present disclosure is
a metal porous body including a frame of a three-dimensional network structure,
wherein the metal porous body has an outer appearance of a sheet shape,
the frame is an alloy containing at least nickel (Ni) and chromium (Cr), and is dissolved with iron (Fe) in solid state, and
the number of aluminum oxide ($Al_2O_3$) powder adhered to the surface of the frame is 10 or less in 1 $cm^2$ of the outer apparent area of the metal porous body.
According to the aspect (1) described in the above, it is possible to cheaply provide a metal porous body that is excellent in corrosion resistance and has fewer fine particles adhered to the surface of the frame.
(2) Preferably, in the metal porous body according to the aspect (1) described in the above, the frame includes a chromium oxide ($Cr_2O_3$) layer and a chromium carbide layer, the chromium oxide layer has a thickness of 0.1 $\mu$m or more and 3 $\mu$m or less, and the chromium carbide layer has a thickness of 1 $\mu$m or more and 20 $\mu$m or less.
According to the aspect (2) described in the above, it is possible to provide a metal porous body having high water repellency due to the presence of chromium oxide on the surface of the frame.
(3) Preferably, in the metal porous body according to the aspect (1) described in the above, the frame includes a chromium oxide ($Cr_2O_3$) layer as the outermost layer and a chromium carbide layer located under the chromium oxide layer, the chromium oxide layer has a thickness of 0.1 $\mu$m or more and 3 $\mu$m or less, and the chromium carbide layer has a thickness of 0.1 $\mu$m or more and less than 1 $\mu$m.
According to the aspect (3) described in the above, it is possible to provide a metal porous body having a frame that is excellent in toughness and high in water repellency.
(4) Preferably, the metal porous body according to any one of the aspects (1) to (3) described in the above has a porosity of 60% or more and 98% or less.
According to the aspect (4) described in the above, it is possible to provide a metal porous body having a very high porosity.
(5) Preferably, the metal porous body according to any one of the aspects (1) to (4) described in the above has an average pore size of 50 $\mu$m or more and 5000 $\mu$m or less.
According to the aspect (5) described in the above, it is possible to provide a metal porous body that is efficient in diffusing gas and discharging water generated by power generation when it is used as a gas diffusion layer of a fuel cell.
(6) A fuel cell according to an aspect of the present disclosure is a fuel cell that includes a gas diffusion layer, wherein the gas diffusion layer is a metal porous body according to any one of the aspects (1) to (5) described in the above.
According to the aspect (6) described in the above, it is possible to provide a fuel cell that is compact and powerful.
(7) A method of producing a metal porous body according to an aspect of the present disclosure is a method of producing the metal porous body according to any one of the aspects (1) to (5) described in the above. The method includes:

preparing a porous body that includes a frame having a three-dimensional network structure and containing nickel as a main component;
alloying at least nickel with chromium by burying the porous body in powder that contains at least chromium (Cr), aluminum oxide ($Al_2O_3$) powder and ammonium chloride ($NH_4Cl$) and performing a heat treatment to cause diffusion coating of the frame with the chromium to form a metal porous body; and
removing the aluminum oxide powder adhered to the surface of the frame of the metal porous body so as to be 10 or less in 1 $cm^2$ of the outer apparent area of the metal porous body.

According to the method of producing a metal porous body described above in the aspect (7), it is possible to cheaply produce a metal porous body that is excellent in corrosion resistance and has fewer fine particles adhered to the surface of the frame.
(8) Preferably, in the method of producing a metal porous body according to the aspect (7) described in the above, removing the aluminum oxide powder adhered to the surface of the frame of the metal porous body is performed by spraying high-pressure water onto the metal porous body.
(9) Preferably, in the method of producing a metal porous body according to the aspect (7) described in the above, removing the aluminum oxide powder adhered to the surface of the frame of the metal porous body is performed by treating the metal porous body with acid.
According to the method of producing a metal porous body described above in the aspects (8) and (9), it is possible to easily produce a metal porous body that has fewer fine particles adhered to the surface of the frame.

(10) Preferably, in method of producing a metal porous body according to any one of the aspects (7) to (9) described in the above,

the porous body is obtained by

performing an electro-conductive treatment on a surface of a frame that is included in a resin molded article and has a three-dimensional network structure by applying carbon powder to the surface of the frame of the resin molded article;

plating nickel on the surface of the frame of the resin molded article after the electro-conductive treatment;

removing the resin molded article by performing a heat treatment in an oxidizing atmosphere after the plating of nickel; and

performing a heat treatment in a reducing atmosphere containing water vapor ($H_2O$) to reduce the amount of carbon remaining in the nickel after the resin molded article is removed.

According to the aspect (10) described in the above, it is possible to provide a metal porous body that includes a frame having a highly water-repellent surface.

[Detailed Description of Embodiments]

In the following, specific examples of a metal porous body, a fuel cell, and a method of producing a metal porous body according to an embodiment of the present disclosure will be described in more detail. Note that the present disclosure is not defined by the examples given below but defined by the claims, and it is intended that the present disclosure encompasses all modifications and variations equivalent in meaning and scope to the claims.

<Metal Porous Body>

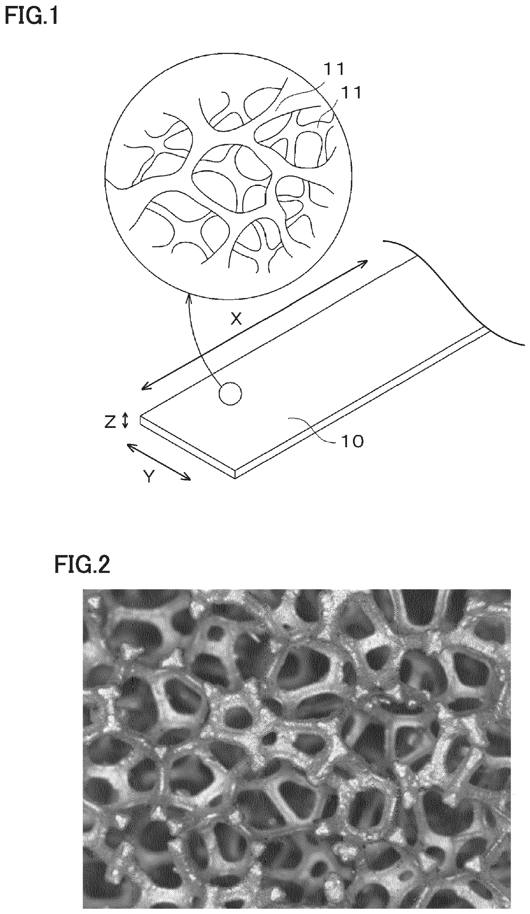

Fig. 1 is a schematic view illustrating an example metal porous body according to an embodiment of the present disclosure. As illustrated in Fig. 1, a metal porous body 10 according to an embodiment of the present disclosure includes a frame 11 of a three-dimensional network structure and has an outer appearance of a sheet shape. Each pore defined by the frame 11 is a continuous pore that connects a surface of the metal porous body 10 to the interior thereof.

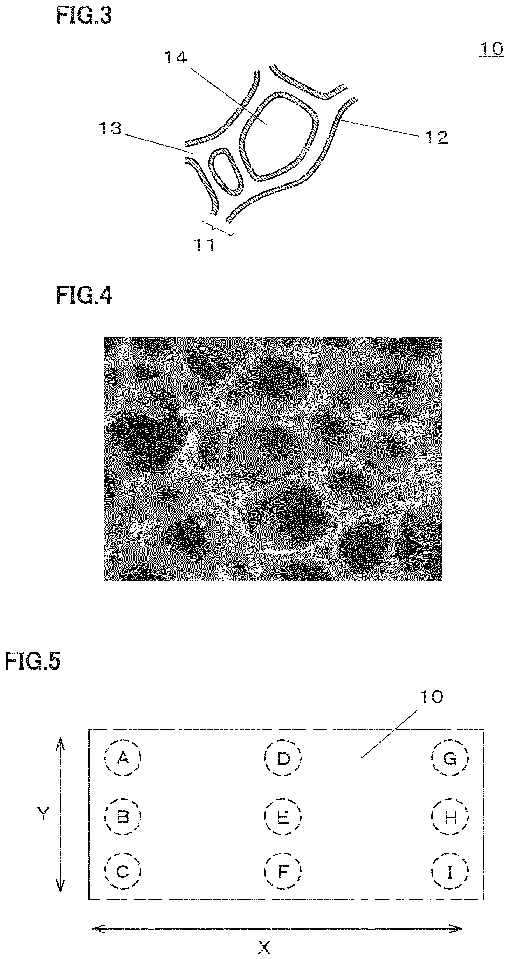

Fig. 2 is a photograph illustrating a cross section of the frame 11, which has a three-dimensional network structure, of the metal porous body 10 according to an embodiment of the present disclosure. Fig. 3 is an expanded view schematically illustrating a cross section of the metal porous body 10 illustrated in Fig. 2. When the frame 11 has a three-dimensional network structure, an interior portion 13 of the frame 11 of metal porous body 10 is hollow as typically illustrated in Fig. 3. The frame 11 is made of an alloy film 12. Further, the frame 11 forms pores 14.

The frame 11 may be an alloy containing at least nickel (Ni) and chromium (Cr), and may be formed of a film in which iron (Fe) is dissolved in solid state. Nickel is a component having the largest content ratio in the frame 11, and therefore is a main component. Chromium in the frame 11 may be alloyed with nickel and present as Cr2Ni3 or may be present as chromium oxide ($Cr_2O_3$), and needless to say, it may be alloyed with other metal components. Iron may be dissolved in an alloy component or a metal component of the frame 11 in solid state.

The chromium content in the frame 11 is preferably about 5 mass% or more and about 50 mass% or less. When the chromium content in the frame 11 is 5 mass% or more, it is possible to obtain a metal porous body that is excellent in corrosion resistance and hardly elutes nickel under strong acidity. When the chromium content in the frame 11 is 50 mass% or less, it is possible to obtain a metal porous body having excellent tensile strength with less production costs. From these viewpoints, the chromium content in the frame 11 is more preferably about 10 mass% or more and about 45 mass% or less, and further preferably about 20 mass% or more and about 40 mass% or less.

The iron content in the frame 11 is preferably about 50 ppm or more and 5000 ppm or less, more preferably about 100 ppm or more and 3000 ppm or less, and further preferably about 200 ppm or more and 2000 ppm or less. When the iron content in the frame 11 is 50 ppm or more, a spinel-type complex oxide $FeCr_2O_4$ may be formed under an FeO layer, which may mitigate the detachment of the chromium oxide mentioned above from the surface of the frame 11. When the iron content in the frame 11 is 5000 ppm or less, an increase in electrical resistance of the metal porous body may be mitigated.

The frame 11 may intentionally or inevitably contain components other than nickel, chromium, and iron. Examples of other components include manganese (Mn), silicon (Si), aluminum (Al), and zirconium (Zr). In other words, the frame may further include at least one selected from the group consisting of manganese, silicon, aluminum, and zirconium. In particular, when silicon is contained in the frame 11 in the form of $SiO_2$, since $SiO_2$ has an effect of mitigating the detachment of the chromium oxide from the surface of the frame 11, the metal porous body is excellent in water repellency.

In the metal porous body 10 according to an embodiment of the present disclosure, the amount (or number) of aluminum oxide ($Al_2O_3$) powder adhered to the surface of the frame 11 is 10 or less in 1 cm$^2$ of the apparent area of the metal porous body 10. The lower limit of the number may be 0 or more, or may be 1 or more. In the present embodiment, the "amount of aluminum oxide powder" mentioned above may be interpreted as the number of aluminum oxide particles. The aluminum oxide powder may detach from the surface of the frame 11 and may scatter to the surrounding when the metal porous body 10 is being used, and thereby, it is preferable that the amount of aluminum oxide powder adhered to the surface of the frame 11 is as less as possible. Therefore, the amount (number) of aluminum oxide ($Al_2O_3$) powder adhered to the surface of the frame 11 is more preferably 5 or less and further preferably 1 or less in 1 $cm^2$ of the outer apparent area of the metal porous body 10. When the number of aluminum oxide powder adhered to the surface of the frame is 10 or less and the metal porous body having such frame is used in a fuel cell as a gas diffusion layer, the pressure loss of gas during operation may be mitigated.

The amount of aluminum oxide powder adhered to the surface of the frame 11 may be measured in the following manner.

As illustrated in Fig. 5, in 1 $cm^2$ of the outer apparent area of the flat plate-shaped metal porous body 10, 9 spots are defined in two end portions and a central portion along the long side direction X and the short side direction Y as measurement spots A to I. Each of the two end portions refers to a portion that is inner to the end edge about 5 cm. Then, the measurement spots A to I on the surface of the frame 11 are observed using a microscope having a magnifying power of 10 times. When observing the surface of the frame 11 with the microscope, each of the measurement spots A to I is observed under a field of view of 10 times, and the number of aluminum oxide powder observed in each field of view is counted. When observing with the microscope, the metal porous body is observed from one surface thereof, and only a focused surface portion of the frame is observed. The average of the number of aluminum oxide powder in each field is defined as the number of aluminum oxide powder adhered to the measurement spot (for example, the measurement spot A). Similarly, the number of aluminum oxide powder adhered to each of the other measurement spots (the measurement spots B to I) is determined. The average of the number of aluminum oxide powder adhered to the measurement spots A to I is defined as the number of the adhered aluminum oxide powder in 1 $cm^2$ of the outer apparent area of the metal porous body 10.

It is preferable that the frame 11 includes a chromium oxide ($Cr_2O_3$) layer and a chromium carbide layer. It is preferable that the outermost layer of the frame 11 is formed by the chromium oxide ($Cr_2O_3$) layer, and the chromium carbide layer is formed under the chromium oxide layer. Since the outermost layer of the frame 11 is formed by the chromium oxide layer, the metal porous body is excellent in water repellency. In addition, since the frame 11 includes the chromium carbide layer, the metal porous body is excellent in hardness. When the chromium carbide layer is thick, the outermost layer of a portion of the frame 11 may be formed by the chromium carbide layer, and the chromium oxide layer may be formed under the chromium carbide layer. The thickness of the chromium oxide layer and the thickness of the chromium carbide layer included in the frame 11 may be appropriately adjusted in accordance with different applications of the metal porous body.

The thickness of the chromium oxide layer serving as the outermost layer of the frame 11 is preferably 0.1 $\mu$m or more and 3 $\mu$m or less. When the thickness of the chromium oxide layer is 0.1 $\mu$m or more, the metal porous body may have an enhanced water repellency. Since the surface of the frame 11 has a high water repellency, when the metal porous body is used, for example, as a gas diffusion layer of a fuel cell, water generated during power generation may be efficiently discharged. The water repellency effect attributed to the chromium oxide layer saturates when the thickness of the chromium oxide layer is about 3 $\mu$m, and therefore, the thickness of the chromium oxide layer may be set to 3 $\mu$m or less. Moreover, by setting the thickness of the chromium oxide layer to 3 $\mu$m or less, an increase in the production cost of the metal porous body may be suppressed.

Since chromium carbide has a high hardness, the presence of the chromium carbide layer in the frame 11 increases the hardness of the frame 11. However, too much chromium carbide may make the frame 11 brittle. The chromium carbide in the chromium carbide layer may be present in two states: $Cr_7C_3$ and Cr23C6. The chromium carbide may also be present at the grain boundary between the chromium oxide crystals in the chromium oxide layer.

When the metal porous body is used in an application such as a filter where the frame is required to have a high hardness, the thickness of the chromium carbide layer is preferably 1 $\mu$m or more and 20 $\mu$m or less.

When the thickness of the chromium carbide layer in the frame 11 is thin, the thickness of the outermost chromium oxide layer may be formed thicker, and the chromium carbide layer may be formed under the outermost chromium oxide layer (the inner side of the frame 11). Thus, when the metal porous body is used in an application such as a gas diffusion layer of a fuel cell where the surface of the frame is required to have a high water repellency, the thickness of the chromium carbide layer is preferably 0.1 $\mu$m or more and 1 $\mu$m or less, more preferably 0.1 $\mu$m or more and 0.5 $\mu$m or less, and further preferably 0.1 $\mu$m or more and 0.3 $\mu$m or less.

The presence of the chromium oxide layer and the chromium carbide layer in the frame 11 may be confirmed by analyzing the frame of the metal porous body by energy dispersive X-ray spectrometry (EDX), X-ray fluorescence (XRF), and/or X-ray diffraction (XRD).

The porosity of the metal porous body 10 according to the embodiment of the present disclosure may be appropriately selected in accordance with different applications of the metal porous body. The porosity of the metal porous body 10 is calculated by the following equation.

$$\text{Porosity } (\%) = [1 - \{Mp \, / \, (Vp \times dp)\}] \times 100$$

Mp: mass of the metal porous body [g]
Vp: apparent volume of the metal porous body [$cm^3$]
dp: density of metal or alloy constituting the metal porous body [$g/cm^3$]

When the metal porous body 10 is used as a gas diffusion layer of a fuel cell, for example, it is preferable that the gas diffusing performance is excellent and the pressure loss is small. Therefore, the porosity is preferably 60% or more and 98% or less, more preferably 70% or more and 98% or less, and further more preferably 90% or more and 98% or less.

The average pore size of the metal porous body 10 according to an embodiment of the present disclosure may be appropriately selected in accordance with different applications of the metal porous body. The average pore size of the metal porous body 10 is obtained in the following manner: the surface of the metal porous body 10 is examined with a microscope or the like in at least 10 fields of view, the average number (nc) of pores within one inch (= 25.4 mm = 25400 $\mu$m) is counted, and the average pore size is calculated by the following equation:

$$\text{average pore size } (\mu m) = 25400 \ \mu m/nc$$

When the metal porous body 10 is used as a gas diffusion layer of a fuel cell, for example, the average pore size of the metal porous body 10 may be selected in consideration of the diffusion performance and the pressure loss of the gas passing through the pores 14. More specifically, when the metal porous body is used as a gas diffusion layer of a fuel cell, the average pore size of the metal porous body is preferably 50 $\mu$m or more and 5000 $\mu$m or less, more preferably 100 $\mu$m or more and 1000 $\mu$m or less, and further preferably 200 $\mu$m or more and 700 $\mu$m or less.

The thickness of the metal porous body 10 according to an embodiment of the present disclosure is not particularly limited, and may be appropriately selected in accordance with different applications of the metal porous body. The thickness of the metal porous body 10 may be measured by using, for example, a digital thickness gauge.

In many cases, when the thickness of the metal porous body is set to 0.1 mm or more and 3.0 mm or less, the metal porous body may be light in weight and high in strength. From these viewpoints, the thickness of the metal porous body 10 is more preferably 0.3 mm or more and 2.5 mm or less, and further preferably 0.4 mm or more and 2.0 mm or less.

<Fuel Cell>

As long as the fuel cell according to an embodiment of the present disclosure includes the metal porous body described above according to an embodiment of the present disclosure as a gas diffusion layer, it may have the other configurations the same as those of a conventional fuel cell. The fuel cell is not particularly limited in types, and it may be a solid polymer fuel cell or a solid oxide fuel cell. Moreover, since the metal porous body 10 is electrically conductive, it may also be used in the fuel cell as a gas diffusion layer and as a current collector at the same time.

The fuel cell according to an embodiment of the present disclosure includes a gas diffusion layer which is excellent in gas diffusion performance, and thereby is efficient in gas utilization. Therefore, size reduction and power enhancement of the fuel cell are achievable at the same time. Moreover, in the fuel cell according to an embodiment of the present disclosure, since the amount of aluminum oxide powder adhered to the surface of the frame of the metal porous body is small, the aluminum oxide powder does not scatter when the fuel cell is being used, and the pressure loss in the gas diffusion layer is small.

<Method of Producing Metal Porous Body>

A method of producing a metal porous body according to an embodiment of the present disclosure is a method of producing a metal porous body described above according to an embodiment of the present disclosure, and at least includes: a step of preparing a porous body containing nickel as a main component (preparation step); a step of alloying nickel of the porous body with chromium to obtain a metal porous body (alloying step); and a step of removing aluminum oxide adhered to the surface of the frame of the metal porous body (removing step). The method may further includes a step of reducing carbon which remains in the porous body (carbon removing step) if necessary. Each step will be described in detail hereinafter.

(Preparation Step)

The preparation step is a step of preparing a porous body that includes a frame having a three-dimensional network structure and containing nickel as a main component. The porous body has an outer appearance of a sheet shape in a whole. Since the metal porous body according to an embodiment of the present disclosure is obtained by alloying nickel of the porous body with chromium, the porous body may be prepared to have a structure (such as the porosity and the average pore size) the same as the structure required for the metal porous body. As in the case of the metal porous body, the porous body may be prepared to include a frame typically hollow inside and pores formed by the frame. The porosity and average pore size of the porous body are defined in the same manner as the porosity and average pore size of the metal porous body.

Note that the expression "the frame containing nickel as a main component" means that the frame of the porous body contains nickel in the highest amount.

As a porous body including a frame of a three-dimensional network structure, for example, Celmet (a metal porous body containing Ni as a main component. "Celmet" is a registered trademark) manufactured by Sumitomo Electric Industries, Ltd. may be preferably used. If the desired porous body is not available in the market, it may be produced by the following method.

-Electro-conductive Treatment Step-

First, a resin molded article that has a sheet shape and includes a frame of a three-dimensional network structure (which may be simply called "resin molded article" hereinafter) is prepared. A polyurethane resin or a melamine resin can be used as the resin molded article. Fig. 4 illustrates a photograph of a foamed urethane resin that includes a frame of a three-dimensional network structure.

Next, an electro-conductive treatment (electro-conductive treatment step) is performed on the surface of the frame of the resin molded article by applying carbon powder to the surface of the frame of the resin molded article. Examples of the carbon powder used in the electro-conductive treatment include amorphous carbon powder such as carbon black and carbon powder such as graphite.

-Plating Step-

In the plating step, nickel electroplating is performed using, as a base material, the resin molded article, the surface of the frame of which has been made electrically conductive. Instead of electroplating, nickel sputtering and/or electroless nickel plating may be employed to form a nickel film. However, from the viewpoints of productivity and cost, electroplating is preferable.

Nickel electroplating may be performed by a known technique. As the plating bath, any known or commercially available plating bath, such as a Watts bath, a chloride bath, or a sulfamate bath, may be used. Nickel electroplating may be performed by immersing the resin molded article resulting from the electro-conductive treatment into a plating bath, connecting the resin molded article to a cathode and connecting a nickel counter electrode plate to an anode, and applying a direct current or a pulse intermittent current.

-Resin Molded Article Removing Step-

After the plating step, the resin molded article that is formed with a nickel plating film on the surface of its frame is subjected to heat treatment in an oxidizing atmosphere, and thereby the resin molded article used as the base material is removed. The removal of the resin molded article may be performed, for example, by heating the resin molded article to a temperature of about 600°C or higher and about 800°C or lower, preferably about 600°C or higher and 700°C or lower in an oxidizing atmosphere such as air. Thereby, the resin molded article used as the base material is burned off, and the porous body which contains nickel as a main component is obtained.

-Carbon Removing Step-

Although the resin molded article used as the base material may be removed by the resin molded article removing step described above, the amorphous carbon powder or carbon powder used in the electro-conductive treatment may remain in the interior portion (the hollow interior) of the frame of the porous body containing nickel as a primary component (a nickel plating film). Such carbon powder may become a source of chromium carbide in the alloying step of nickel and chromium to be described later. Thus, when it is desired to reduce the amount of chromium carbide contained in the frame of the metal porous body according to an embodiment of the present disclosure, it is preferable to remove the carbon powder. When the amount of carbon remaining in the frame of the porous body containing nickel as a main component is 0.7 mass% or more, $Cr_7C_3$ is generated in the alloying step (chromizing treatment) which will be described later. Moreover, if a large amount of chromium is supplied, Cr23C6 will be generated.

The carbon removing step may be performed by subjecting the porous body containing nickel as a main component to a heat treatment in a reducing atmosphere containing water vapor ($H_2O$). The heat treatment may be performed at 750°C or higher. The heat treatment temperature is preferably higher, but it may be set to 1000°C or lower in terms of costs and the furnace material of the reduction furnace.

As the reducing gas, hydrogen gas or a mixed gas of hydrogen and carbon dioxide or an inert gas may be used, or as needed a combination of these may be used. In particular, it is preferable to add hydrogen gas to the reducing gas in terms of improving the redox efficiency. The carbon remaining in the interior portion of the frame of the porous body containing nickel as a main component may be removed by adding water vapor ($H_2O$) to the reducing gas.

In addition, since the carbon removing step is carried out in a reducing atmosphere, nickel that was oxidized in the resin molded article removing step may be reduced to form a dense metal film. When it is not desired to remove carbon remaining in the interior portion of the frame of the porous body containing nickel as a main component, the heat treatment may be performed without including water vapor in the reducing gas.

(Alloying Step)

The alloying step is a step of forming an alloy of nickel and chromium by diffusion coating the frame of the porous body containing nickel as a main component with chromium. Any known technique may be used to perform diffusion coating with chromium. For example, such a technique may be used that involves burying the porous body containing nickel as a main component in powder containing at least chromium, aluminum oxide, and ammonium chloride, and heating the same to a temperature of 800°C or more and about 1100°C or less in an atmosphere of an inert gas such as Ar gas or in an atmosphere of a gas that has the same composition as the gas generated in the heat treatment.

In addition, when the diffusion coating of chromium is performed in an iron furnace or a stainless steel furnace, iron or manganese may be dissolved in solid state in the frame of the porous body.

(Powder Removing Step)

A metal porous body including a frame that is an alloy containing at least nickel and chromium and is dissolved with iron in solid state after the alloying step. However, after thorough investigation, the present inventors found that there is a small amount of aluminum oxide powder adhered to the surface of the frame. Therefore, in the method of producing a metal porous body according to an embodiment of the present disclosure, a step of removing aluminum oxide powder (powder removing step) is performed after the alloying step. The powder removing step is performed so that the number of aluminum oxide powder adhered to the surface of the frame of the metal porous body is 10 or less in 1 $cm^2$ of the outer apparent area of the metal porous body.

Example methods of removing aluminum oxide powder from the surface of the frame include high-pressure washing, acid treatment, ultrasonic irradiation, and vibration.

The high-pressure cleaning method is performed by spraying high-pressure water onto the frame of the metal porous body. For example, a high pressure cleaning machine may be used to spray water onto the frame of the metal porous body with a pressure of about 5 MPa or more and 10 MPa or less at a flow rate of about 5 L/min or more and 10 L/min or less. The higher the water temperature, the better the cleaning effect. Therefore, it is preferable to use water having a temperature of about 55°C or more and 70°C or less.

The acid treatment method may be performed by immersing the metal porous body in an acid which is hard to dissolve Ni and/or Cr. As the acid, for example, nitric acid, hydrochloric acid, sulfuric acid and the like may be used. The length of immersing time may be appropriately adjusted according to the type and concentration of the acid to be used.

The ultrasonic irradiation method may be performed by immersing the metal porous body in water and irradiating the same with ultrasonic waves.

The vibration method is a method in which aluminum oxide powder is detached from the frame by applying physical vibration to the metal porous body. As an example, the metal porous body may be placed on a diaphragm and then the diaphragm is vibrated.

After the aluminum oxide powder is removed from the surface of the frame by any of the abovementioned methods, the metal porous body is drained off water and dried, and the number of aluminum oxide powder adhered to the surface of the frame is counted. The number may be counted in the same manner as that described above in relation to the metal porous body according to an embodiment of the present disclosure.

If the number of aluminum oxide powder adhered to the surface of the frame of the metal porous body is 11 or more in 1 $cm^2$ of the outer apparent area of the metal porous body, further cleaning is performed to remove the aluminum oxide powder so that the number is 10 or less.

<Notes>

The above description includes the features noted below.

(Note 1) A sheet-shaped metal porous body including a frame of a three-dimensional network structure, wherein the frame is an alloy containing at least nickel (Ni) and chromium (Cr), and is dissolved with iron (Fe) in solid state, the amount of aluminum oxide ($Al_2O_3$) powder adhered to the surface of the frame is 10 or less in 1 $cm^2$ of the apparent area of the metal porous body.

(Note 2) The metal porous body according to note 1, wherein the frame includes a chromium oxide ($Cr_2O_3$) layer and a chromium carbide layer, the chromium oxide layer has a thickness of 0.1 $\mu$m or more and 3 $\mu$m or less, and the chromium carbide layer has a thickness of 1 $\mu$m or more and 20 $\mu$m or less.

(Note 3) The metal porous body according to note 1, wherein the frame includes a chromium oxide ($Cr_2O_3$) layer as the outermost layer and a chromium carbide layer located under the chromium oxide layer, the chromium oxide layer has a thickness of 0.1 $\mu$m or more and 3 $\mu$m or less, and the chromium carbide layer has a thickness of 0.1 $\mu$m or more and less than 1 $\mu$m.

(Note 4) The metal porous body according to any one of note 1 to note 3, wherein the metal porous body has a porosity of 60% or more and 98% or less.

(Note 5) The metal porous body according to any one of note 1 to note 4, wherein the metal porous body has an average pore size of 50 $\mu$m or more and 5000 $\mu$m or less.

(Note 6) A fuel cell including the metal porous body according to any one of note 1 to note 5 as a gas diffusion layer.

(Note 7) A method of producing a metal porous body according to note 1 includes:

preparing a porous body that includes a frame having a three-dimensional network structure and containing nickel as a main component;

alloying at least nickel with chromium by burying the porous body in powder that contains at least chromium (Cr), aluminum oxide powder ($Al_2O_3$) and ammonium chloride ($NH_4Cl$) and performing a heat treatment to cause diffusion coating of the frame with the chromium to form a metal porous body; and

removing the aluminum oxide powder adhered to the surface of the frame of the metal porous body so as to be 10 or less in 1 $cm^2$ of the apparent area of the metal porous body.

(Note 8) The method for producing a metal porous body according to note 7, wherein removing the aluminum oxide powder adhered to the surface of the frame of the metal porous body is performed by spraying high-pressure water onto the metal porous body.

(Note 9) The method of producing a metal porous body according to note 7, wherein removing the aluminum oxide powder adhered to the surface of the frame of the metal porous body is performed by treating the metal porous body with acid.

(Note 10) The method for producing a metal porous body according to any one of notes 7 to 9, wherein the porous body is obtained by performing an electro-conductive treatment on a surface of a frame that is included in a resin molded article and has a three-dimensional network structure by applying carbon powder to the surface of the frame of the resin molded article;

plating nickel on the surface of the frame of the resin molded article after the electro-conductive treatment;

removing the resin molded article by performing a heat treatment in an oxidizing atmosphere after the plating of nickel; and

performing a heat treatment in a reducing atmosphere containing water vapor ($H_2O$) to reduce the amount of carbon remaining in the nickel after the resin molded article is removed.

(Note 11) The metal porous body according to note 1, wherein the alloy that contains at least nickel and chromium is $Cr_2Ni_3$.

(Note 12) The metal porous body according to note 1, wherein the chromium content in the frame is 5 mass% or more and 50 mass% or less.

(Note 13) The metal porous body according to note 1, wherein the iron content in the frame is 50 ppm or more and 5000 ppm or less.

(Note 14) The metal porous body according to note 1, wherein the frame further includes at least one selected from the group consisting of manganese, silicon, aluminum, and zirconium.

[Examples]

Hereinafter, the present invention will be described in more detail in term of examples. These examples are given by way of illustration, and the metal porous body and the like according to the present disclosure are not limited to those in these examples. The scope of the present invention is defined by claims, and encompasses all modifications and variations equivalent in meaning and scope to the claims.

(Example 1)

<Preparation Step>

A porous body including a frame of a three-dimensional network structure was prepared in the following manner.

-Electro-conductive treatment step-

A polyurethane sheet having a width of 1 m and a thickness of 1.0 mm was used as a resin molded article including a frame of a three-dimensional network structure. The resin molded article had a porosity of 96% and an average pore size of 450 $\mu$m.

100 g of carbon black, which is amorphous carbon having a particle size of 0.01 $\mu$m or more and 0.20 $\mu$m or less, was dispersed in 0.5 L of a 10% aqueous solution of acrylic ester resin, and thus an adhesive coating material was prepared at this ratio.

Next, the resin molded article was continuously immersed in the adhesive coating material, squeezed with a roller, and dried to form a conductive layer on a surface of the frame of the resin molded article. In this way, the electro-conductive treatment of the resin molded article was performed.

-Plating Step-

Nickel was deposited at an amount of 500 g/m$^2$ on the surface of the frame of the resin molded article subjected to the electro-conductive treatment by electroplating to produce a resin structure with a nickel plating film on the surface of the frame thereof.

-Resin Molded Article Removing Step-

Then, in order to remove the resin molded article from the resin structure obtained as described above, the resin structure was heated to 700°C in atmospheric air (in an oxidizing atmosphere). Thereby, the resin molded article was removed and a porous body containing nickel as a main component was obtained.

-Reduction Step-

Subsequently, in order to reduce nickel in the porous body obtained as described above, the porous body is heated to 1000°C in a reducing atmosphere containing a reducing gas which is a mixed gas of H2 and N2 (decomposed gas from ammonia).

Thereby, a porous body, in which nickel was reduced and annealed, was obtained.

<Alloying Step>

A mixed powder was prepared by blending 1 mass% of Al powder, 50 mass% of Cr powder, 0.5 mass% of NH$_4$Cl, and the remainder being Al$_2$O$_3$ powder in a stainless steel furnace, and the porous body was buried in the prepared mixed powder. Next, the heat treatment was performed at 1000°C for 10 hours.

<Powder Removing Step>

The metal porous body obtained after the alloying step was sprayed with water at a pressure of 8 MPa and a flow rate of 6 L/min using a high pressure cleaning machine (Hobby 80 manufactured by Asada Co., Ltd.) to remove the powder remaining on the surface of the frame. The temperature of sprayed water was 65°C. The distance between the metal porous body and the nozzle was 200 mm to 300 mm. After washing the surface for about 60 seconds, the opposite surface was washed in the same manner. After washed with high-pressure water, the metal porous body was dried, and thereby a metal porous body No. 1 was obtained.

(Example 2)

A metal porous body No. 2 was obtained in the same manner as in Example 1 except that the powder removing step was performed as follows.

<Powder Removing Step>

The metal porous body obtained after the alloying step was immersed in 1 mol/L of nitric acid with soft shaking for 1 hour. After the treatment with nitric acid, the metal porous body was washed with water, and thereby the metal porous body No. 2 was obtained.

(Example 3)

A metal porous body No. 3 was obtained in the same manner as in Example 1 except that the reduction step in the preparation step of Example 1 was replaced with the following carbon removing step.

-Carbon Removing Step-

Except that a gas obtained by adding water vapor ($H_2O$) to a mixed gas of H2 and N2 (decomposed gas from ammonia) was used in the reduction step performed in Example 1, the heat treatment was performed in the same manner as in Example 1, and thereby, the porous body from which carbon was removed was obtained.

(Comparative Example 1)

A metal porous body No. A was obtained in the same manner as in Example 1 except that the powder removing step in Example 1 was not performed.

(Comparative Example 2)

A metal porous body No. B was obtained in the same manner as in Example 3 except that the powder removing step in Example 3 was not performed.

(Evaluation)

<Measurement of Aluminum Oxide Powder Adhered to Frame Surface>

The number of aluminum oxide powder adhered to the surface of the frame of each of the metal porous body No. 1 to No. 3 and the metal porous body No. A to No. B was measured in the manner as described above.
As a result, in 1 $cm^2$ of the outer apparent area of the metal porous body, the number is 0 for the metal porous body No. 1, the number is 1 for the metal porous body No. 2, the number is 1 for the metal porous body No. 3, the number is 20 for the metal porous body No. A, and the number is 25 for the metal porous body No. B.
Thereby, compared with the conventional metal porous body No. A and No. B, it was confirmed that the number of aluminum oxide powder adhered to the surface of the frame of the metal porous body No. 1 to No. 3 according to an embodiment of the present disclosure was very small.
The measurement results are listed in Table 1.

<Enlarged Photo of Frame Surface>

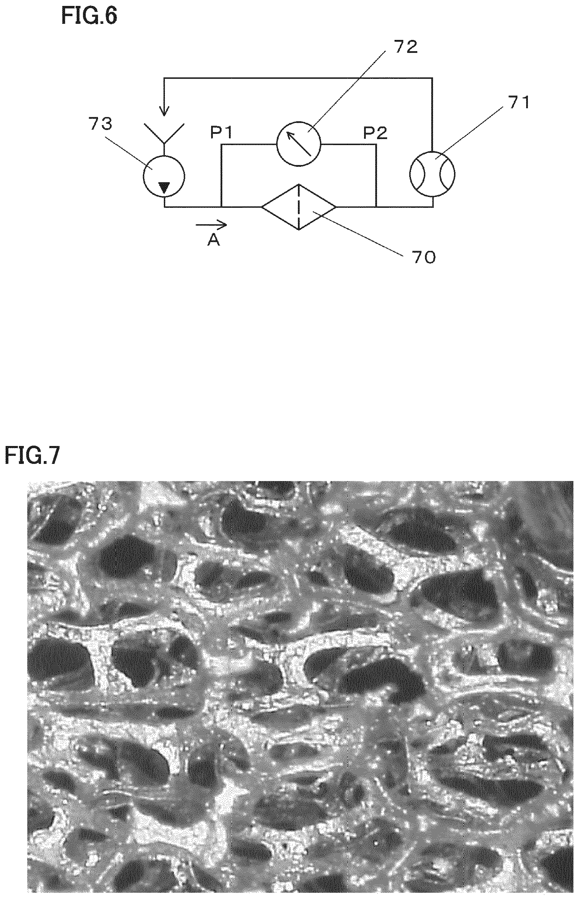

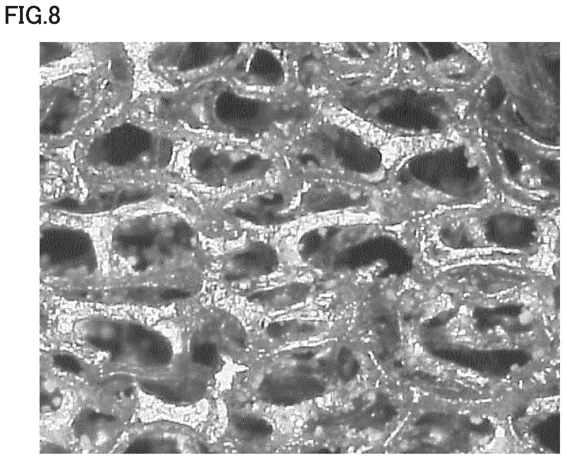

Photographs obtained by observing the surface of the frame of the metal porous body No. 1 and the metal porous body No. A with an optical microscope are illustrated respectively in Fig. 7 and Fig. 8. The magnification power of the optical microscope was 40 times.
As illustrated in Fig. 7, aluminum oxide powder was hardly found on the surface of the frame of the metal porous body No. 1. On the contrary, as illustrated in Fig. 8, aluminum oxide powder was found at several places on the surface of the frame of the metal porous body No. B.

<Measurement of Components of Frame>

The composition of and the alloy components of the frame of each of the metal porous body No. 1 to No. 3 and the metal porous body No. A to No. B were examined by EDX analysis and/or XRD analysis. The cross section of the frame of each metal porous body was examined by SEM. In addition, the surface of the frame of each metal porous body was etched with nitric acid, and the cross section of the frame was examined by SEM. In this way, the presence of a chromium carbide layer was checked.

The measurement results are listed in Table 1.

<Water Repellency>

Each metal porous body was kept stationary, and 1 drop of pure water (about 0.03 to 0.05 ml) was dropped onto the outer main surface of each metal porous body with a dropper. The metal porous body was visually observed from a side surface thereof, and the time until the water droplet cannot be observed from the outer main surface (until the water droplet is soaked into the pores) was measured.

The results are summarized in Table 1.

<Pressure Loss>

The pressure loss was measured by a flow rate-pressure loss test performed by flowing gas in the longitudinal axis direction of the pores in each metal porous body. Specifically, as illustrated by the circuit diagram in Fig. 6, gas is supplied from a pump 73 to a test sample (metal porous body) 70 at a flow rate of 0.5 L/min, and a pressure P1 of the gas before it passes through the test sample (metal porous body) 70 and a pressure P2 of the gas after it passed through the test sample were measured by a pressure gauge 72. The pressure loss $\Delta P$ in each test sample (metal porous body) 70 was calculated as $\Delta P = P1 - P2$. The flow rate of the gas was measured by a flow meter 71.

The results are listed in Table 1.

[Table 1]

| Metal porous body No. | Surface EDX (%) | | | | XRD | | | Thickness (μm) | | Number of Al$_2$O$_3$ powder adhered to frame surface | Evaluation | |
|---|---|---|---|---|---|---|---|---|---|---|---|---|
| | Ni | Cr | Si | Fe | Ni$_2$Cr$_3$ | Cr$_2$O$_3$ | Cr$_7$C$_3$ Cr$_{23}$C$_6$ | Cr$_2$O$_3$ | Cr$_7$C$_3$ Cr$_{23}$C$_6$ | | Water repellency (seconds) | Pressure loss (%) |
| 1 | Remainder | 35 | 1.1 | 1.1 | Detected | Not detected | Detected | < 0.1 | 2 | 0 | < 1 | 15 |
| 2 | Remainder | 28 | 0.5 | 1.2 | Detected | Not detected | Detected | < 0.1 | 1 | 1 | < 1 | 18 |
| 3 | Remainder | 22 | 2.0 | 0.5 | Detected | Detected | Not detected | 1.5 | < 0.1 | 1 | > 5 | 16 |
| A | Remainder | 29 | 0.3 | 2.0 | Detected | Not detected | Detected | < 0.1 | 1 | 20 | < 1 | 20 |
| B | Remainder | 25 | 2.5 | 1.5 | Detected | Detected | Not detected | 1 | < 0.1 | 25 | > 5 | 21 |

REFERENCE SIGNS LIST

10: metal porous body; 11: frame; 12: alloy film constituting frame; 13: interior portion of frame; 14: pore; A: gas flow direction; 70: test sample (metal porous body); 71: flow meter; 72: pressure gauge; 73: pump

**Claims**

1. A metal porous body comprising a frame of a three-dimensional network structure,
   wherein the metal porous body has an outer appearance of a sheet shape,
   the frame is an alloy containing at least nickel and chromium, and is dissolved with iron in solid state, and
   the number of aluminum oxide powder adhered to the surface of the frame is 10 or less in 1 $cm^2$ of the outer apparent area of the metal porous body.

2. The metal porous body according to claim 1, wherein
   the frame includes a chromium oxide layer and a chromium carbide layer,
   the chromium oxide layer has a thickness of 0.1 $\mu$m or more and 3 $\mu$m or less, and
   the chromium carbide layer has a thickness of 1 $\mu$m or more and 20 $\mu$m or less.

3. The metal porous body according to claim 1, wherein
   the frame includes a chromium oxide layer as the outermost layer and a chromium carbide layer located under the chromium oxide layer,
   the chromium oxide layer has a thickness of 0.1 $\mu$m or more and 3 $\mu$m or less, and
   the chromium carbide layer has a thickness of 0.1 $\mu$m or more and less than 1 $\mu$m.

4. The metal porous body according to any one of claims 1 to 3, wherein
   the metal porous body has a porosity of 60% or more and 98% or less.

5. The metal porous body according to any one of claims 1 to 4, wherein
   the metal porous body has an average pore size of 50 $\mu$m or more and 5000 $\mu$m or less.

6. A fuel cell including a gas diffusion layer,
   wherein the gas diffusion layer is a metal porous body according to any one of claims 1 to 5.

7. A method for producing a metal porous body according to any one of claims 1 to 5, the method comprising:

   preparing a porous body that includes a frame having a three-dimensional network structure and containing nickel as a main component;
   alloying at least nickel with chromium by burying the porous body in powder that contains at least chromium, aluminum oxide powder and ammonium chloride and performing a heat treatment to cause diffusion coating of the frame with the chromium to form a metal porous body; and
   removing the aluminum oxide powder adhered to the surface of the frame of the metal porous body so as to be 10 or less in 1 $cm^2$ of the outer apparent area of the metal porous body.

8. The method for producing a metal porous body according to claim 7, wherein
   removing the aluminum oxide powder adhered to the surface of the frame of the metal porous body is performed by spraying high-pressure water onto the metal porous body.

9. The method for producing a metal porous body according to claim 7, wherein
   removing the aluminum oxide powder adhered to the surface of the frame of the metal porous body is performed by treating the metal porous body with acid.

10. The method for producing a metal porous body according to any one of claims 7 to 9, wherein
    the porous body is obtained by
    performing an electro-conductive treatment on a surface of a frame that is included in a resin molded article and has a three-dimensional network structure by applying carbon powder to the surface of the frame of the resin molded article;
    plating nickel on the surface of the frame of the resin molded article after the electro-conductive treatment;

removing the resin molded article by performing a heat treatment in an oxidizing atmosphere after the plating of nickel; and

performing a heat treatment in a reducing atmosphere containing water vapor to reduce the amount of carbon remaining in the nickel after the resin molded article is removed.

FIG.1

FIG.2

FIG.3

FIG.4

FIG.5

FIG.6

FIG.7

FIG.8

**EP 3 677 696 A1**

**INTERNATIONAL SEARCH REPORT**

| International application No. |
|---|
| PCT/JP2019/022336 |

A. CLASSIFICATION OF SUBJECT MATTER
Int. Cl. C22C1/08(2006.01)i

According to International Patent Classification (IPC) or to both national classification and IPC

B. FIELDS SEARCHED

Minimum documentation searched (classification system followed by classification symbols)
Int. Cl. C22C1/08

Documentation searched other than minimum documentation to the extent that such documents are included in the fields searched
Published examined utility model applications of Japan 1922-1996
Published unexamined utility model applications of Japan 1971-2019
Registered utility model specifications of Japan 1996-2019
Published registered utility model applications of Japan 1994-2019

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2015-173079 A (NIPPON TELEGRAPH AND TELEPHONE CORPORATION) 01 October 2015, claims, paragraphs [0036], [0037] (Family: none) | 1-6 |
| A | | 7-10 |

☐ Further documents are listed in the continuation of Box C.    ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 29.08.2019 | 10.09.2019 |

| Name and mailing address of the ISA/ Japan Patent Office 3-4-3, Kasumigaseki, Chiyoda-ku, Tokyo 100-8915, Japan | Authorized officer |
|---|---|
| | Telephone No. |

Form PCT/ISA/210 (second sheet) (January 2015)

**EP 3 677 696 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018168091 A
- JP 2012149282 A
- JP 8013129 A